# EUROPEAN PATENT APPLICATION

(11) **EP 1 830 453 A1**
(43) Date of publication of application: **05.09.2007**
(21) Application number: 05816903.8
(22) Date of filing: 16.12.2005
(51) Int. Cl.: H02K 3/28

(54) **MOTOR DEVICE**

(30) Priority: 24.12.2004 JP 2004374897
(71) Applicant: Sumitomo Electric Industries, Ltd., Osaka-shi, Osaka 541-0041 (JP)
(72) Inventor: OKAZAKI, Toru, Sumitomo Electric Industries, Ltd., Osaka-shi, Osaka 5540024 (JP); OHASHI, Shingo, Sumitomo Electric Industries, Ltd., Osaka-shi, Osaka 5540024 (JP); SUGIMOTO, Hidehiko, University of Fukui, Fukui-shi, Fukui 9108507 (JP); TAKEDA, Toshio, Ishikawajima-Harima Heavy, Koto-ku, Tokyo 135-8710 (JP)
(74) Representative: Joly, Jean-Jacques
(86) International application number: PCT/JP2005/023131
(87) International publication number: WO 2006/068043

(57) **Abstract**

Lead wires 13, 14 forming coils of plural poles C1 to C4 by being wound around plural coil winding portions 11a to 11d provided at intervals in a circumferential direction of a stator 11 are lead wires of a parallel circuit provided between a power supply input circuit and a power supply output circuit. The lead wires 13, 14 of the parallel circuit are wound around a pair of coil winding portions 11a, 11b and a pair of coil winding portions 11c, 11d in series, which are arranged opposite to each other in plural coil winding portions 11a to 11d provided with even numbers at equal intervals in the circumferential direction.

## Description

### Technical Field

The invention relates to a motor apparatus, particularly, relates to a motor apparatus used for driving ships, vehicles and the like, capable of realizing high invulnerability by improving connection structure of coils.

### Background Art

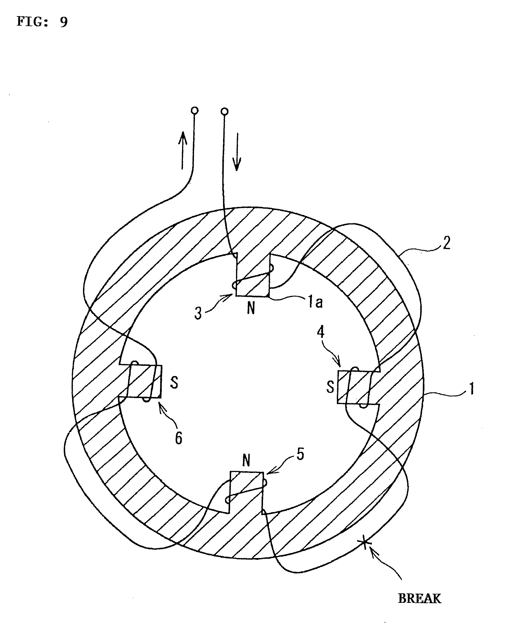

Conventionally, in a motor using an electromagnet for a field, plural field coils 3 to 6 are formed in a circumferential direction by continuously winding one copper wire 2 with respect to plural coil winding portions 1a protruding from an inner circumferential face of a stator 1 at equal intervals, as shown in Fig. 9. In such motor, there is a problem that, when a break or the like occurs at one part of the copper wire 2 forming the field coils 3 to 6, current supply to all field coils 3 to 6 is cut off and the motor is not operated. There is another problem that a failure is spread over the whole motor from the break at one part such that failures of a power supply device and the like connected to the motor are caused by a sudden cut-off of current supply due to the break, and repairs of parts other than the part where the break occurs become necessary.

A method of detecting a break of a motor is disclosed in JP-B-7-31222, JP-A-11-205901 and the like. As described in the publications, if the break can be detected, spread of failure can be prevented by stopping the motor and peripheral equipment at once when the break occurs.

However, it is conceivable that there is a situation that the motor is desired to be continuously used even when one part of the motor fails. For example, in the case of obtaining motive power for moving to a place where the repair can be performed when the failure occurs, as in the case of using the motor as a driving source for a vehicle, a ship and the like, it is fatal that all driving force is lost by the failure of one part, and it is desirable to keep operation with a quick-fix even by reducing output.
- Patent Document:: JP-B-7-31222
- Patent Document:: JP-A-11-205901

### Disclosure of the Invention

### Problems that the Invention is to Solve

The invention has been made in view of the above problems, and an object thereof is to provide a motor capable of continuously operating even when problems such as a break occur.

### Means for Solving the Problems

In order to solve the above problems, first, the invention provides a motor apparatus in which lead wires forming coils of plural poles by being wound around plural coil winding portions provided at intervals in a circumferential direction of a rotor and/or stator are lead wires of a parallel circuit provided between a power supply input circuit and a power supply output circuit.

According to the above configuration, since the lead wires form the parallel circuit, even when abnormality such as a break occurs at one part of the lead wire in plural wires, current is continuously supplied in the lead wire in which a break or the like does not occur, and operation of the motor can be continued by coils formed by the valid lead wire.

It is preferable that the lead wires of the parallel circuit are wound around pairs of coil winding portions in series, the pairs of coil winding portions being arranged opposite to each other in the plural coil winding portions provided with even numbers at equal intervals in a circumferential direction.

Conventionally, in the case of concentrated winding, it is general that the lead wire wound around one coil winding portion is continuously wound around a coil winding portion just adjacent thereto to prevent enlargement of a coil end. In the present invention, it is preferable that a lead wire wound around one coil winding portion is continuously wound around a coil winding portion which is positioned opposite thereto with respect to the central axis line. The coils positioned opposite to each other are formed continuously by one lead wire, thereby disconnecting or securing current supply to the coils by each pair, the field balance can be maintained to be symmetrical as the whole motor.

It is preferable that the lead wires of the parallel circuit are wound around two or more coil winding portions in series, a short-circuit wire connecting a relay point between the coils of the lead wire wound in series to a relay point of another lead wire provided in parallel therewith is provided, a branch wire is drawn from the short-circuit wire, and the branch wire and the lead wires are connected to a control means, and the control means switches the branch wire to a power supply input section or a power supply output section when receiving an abnormality signal from an abnormality detection means.

The above configuration is a hybrid system in which the parallel circuit system is combined with the branch wire system, and even when a trouble such as a break occurs at one part of lead wire in plural lead wires, since respective lead wires form the parallel circuit, current is continuously supplied in the lead wire in which the break or the like does not occur, and operation of the motor can be continued by the coils formed by the valid lead wire.

In addition, when the break or the like occurs at both lead wires forming the parallel circuit, switching of power supply input or power supply output is performed by the branch wire. Therefore, the abnormal point such as the break can be bypassed and current supply can be secured , and operation can be continued by using valid coils. Specifically, the branch wire which is upstream of the abnormal point can be the power supply output section and one end of the lead wire can be the power supply input section. Or, the branch wire which is downstream of the abnormal point can be the power supply input section and the other end of the lead wire can be the power supply output section. When plural branch wires are drawn from different relay points, two branch wires can be the power supply input and output sections.

Secondary, the invention provides a motor apparatus in which coils of plural poles are formed in a series circuit state by winding a lead wire around plural coil winding portions provided at intervals in a circumferential direction of a rotor or a stator, and one end of the lead wire is made to be a power supply input section and the other end is made to be a power supply output section, in which a branch wire is drawn from a relay point between adjacent coils in the lead wire, and the branch wire and the lead wire are connected to a control means, and the control means switches the branch wire to the power supply input section or the power supply output section when receiving an abnormality signal from an abnormality detection means.

According to the above configuration, even when an abnormality such as a break occurs at one part of the lead wire, by performing switching of power supply input or power supply output by the branch wire, the abnormal point such as the break can be bypassed and current supply can be secured, and operation of the motor can be maintained by valid coils. Specifically, the branch wire which is upstream of the abnormal point can be the power supply output section and one end of the lead wire can be the power supply input section. Or, the branch wire which is downstream of the abnormal point can be the power supply input section and the other end of the lead wire can be the power supply output section. When plural branch wires are drawn from different relay points, two branch wires can be the power supply input and output sections. It is preferable that the control means, when performing switching of supply current to the branch wire after detecting abnormality, performs control to increase a current amount to coils for suppressing reduction of magnetic field.

It is preferable that the control means, when receiving an abnormality signal from the abnormality detection means, sequentially selects and tries two of the both ends of the lead wire and the branch wires as power supply input and output sections, searches the branch wire whereby the abnormality detected by the abnormality detection means is alleviated and determines the searched branch wire as the power supply input section or the power supply output section.

According to the above configuration, when an abnormality signal is received from the abnormality detection means, two of one end of the lead wire, the other end of the lead wire and ends of the branch wires are sequentially selected and combinations to be the power supply input and output sections are sequentially tested, the branch wire whereby the abnormality detected by the abnormality detection means is alleviated most efficiently is searched, thereby easily finding which combination makes the operation to be normal without directly specifying the abnormal point, which leads to simplification of the apparatus.

It is preferable that the abnormality detection means detects presence of current in which both ends of the lead wire are the power supply input and output sections, and that the means judges that a break occurs and transmits an abnormality signal to the control means when the current does not flow.

It is also preferable that the abnormality detection means includes a torque sensor and/or a vibration sensor, and that, when a torque amount detected in the torque sensor is less than a predetermined value, and/or when vibration detected by the vibration sensor is more than a predetermined value, the means judges that an abnormality occurs at any of coils and transmits an abnormality signal to the control means .

That is, when the torque sensor or the vibration sensor is used as the abnormality detection means, it is possible to detect abnormality such that part of the coil is dropped off from the coil winding portion, or such that part of the coil winding portion is broken.

It is preferable that plural coil winding portions are provided with even numbers at equal intervals in a circumferential direction and the coil winding portions arranged opposite to each other with respect to the central axis are taken as a pair, the lead wires are wound by each pair and the branch wire is drawn from the relay point between adjacent pairs.

According to the above configuration, the lead wire wound around one coil winding portion is continuously wound around the coil winding portion which is positioned opposite thereto with respect to the central axis, and the branch wire is drawn from between respective pairs. Therefore, disconnection or securement of current supply to coils is performed by each pair, and thus, the field balance can be maintained to be symmetrical as the whole motor.

The respective inventions are particularly efficient when applied to a driving motor for escort vessels, combat vehicles and the like which have high possibility to have damage during operation.

### Advantage of the Invention

As apparent from the above explanation, according to the first invention, since the lead wires form the parallel circuit, even when a break occurs at one part of the lead wire, current is successively supplied in the lead wire in which the break does not occur, and motor operation can be continued by coils formed by the valid lead wire. According to second invention, even when abnormity such as a break occurs at one part of the lead wire, by performing switching of the power supply input or the power supply output by the branch wire, the abnormal point can be bypassed and current supply can be secured, as a result, motor operation can be continued by valid coils.

### Brief Description of the Drawings

[Fig. 1] Fig. 1 is a schematic cross-sectional view of a motor apparatus of a first embodiment of the invention.
[Fig. 2] Fig. 2 is a schematic circuit diagram of the motor apparatus of the first embodiment.
[Fig. 3] Fig. 3 is a schematic cross-sectional view of a motor apparatus of a second embodiment.
[Fig. 4] Fig. 4 is a circuit diagram of the motor apparatus of the second embodiment.
[Fig. 5] Fig. 5 is a schematic cross-sectional view of a motor apparatus of a third embodiment.
[Fig. 6] Fig. 6 is a schematic cross-sectional view of a motor apparatus of a fourth embodiment.
[Fig. 7] Fig. 7 is a circuit diagram showing the motor apparatus of the fourth embodiment.
[Fig. 8] Fig. 8 is a circuit diagram of a motor apparatus of a fifth embodiment.
[Fig. 9] Fig. 9 is a view showing a conventional example. Description of Reference Numerals and Signs
   - 10: motor apparatus
   - 11, 46: stator
   - 11a to 11d, 46a to 46f: coil winding portion
   - 12, 24, 32: power supply device
   - 13, 14, 21, 41, 51, 52: lead wire
   - 22, 42, 43, 54: branch wire
   - 23, 31, 44: control means
   - 25: current-carrying sensor
   - 26, 45: relay control unit
   - 33: torque sensor
   - 34: vibration sensor
   - 53: short-circuit wire
   - C1 to C8: field coil
   - R1 to R5: relay

### Best Mode for Carrying Out the Invention

Embodiments of the invention will be explained with reference to the drawings.

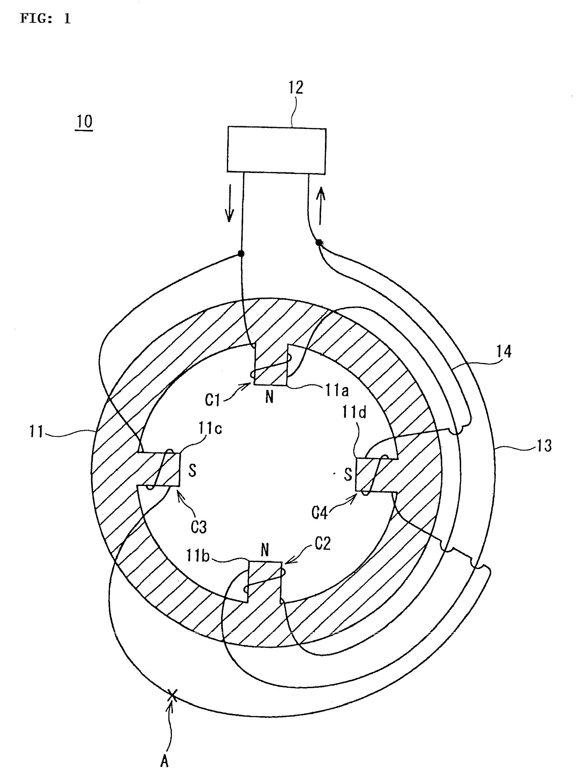

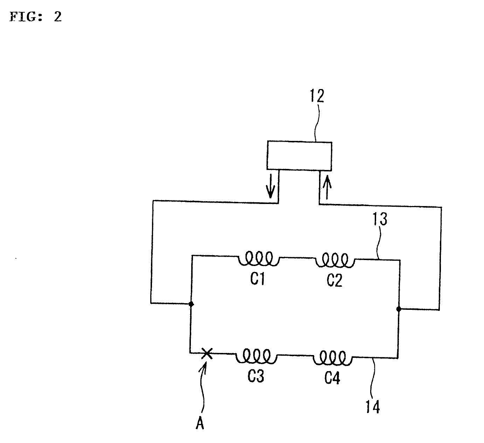

Fig. 1 and Fig. 2 show a first embodiment.

A motor apparatus 10 of the embodiment forms connection of field coils C1 to C4 of a stator 11 in a parallel circuit system.

Fig. 1 is a view in which a rotor is omitted in the motor apparatus 10, and Fig. 2 is a circuit diagram thereof. At an inner circumferential face of the stator 11, four coil winding portions 11a to lid protrude inside at equal intervals in the circumferential direction. Field coils C1 to C4 are formed by winding two lead wires 13, 14 around the coil winding portions 11a to 11d separately. More particularly, the coil winding portions 11a an 11b arranged opposite to each other with respect to the central axis of the motor are made to be one pair, and the coil winding portions 11c and 11d are made to be another pair. The coil winding potions 11a, 11b are formed by winding continuously by one lead wire 13 in series, whereas the coil winding portions 11c, 11d are formed by winding continuously by another lead wire 14 in series.

Input sides of respective lead wires 13, 14 are connected to each other as well as output sides thereof are connected to each other, and one end thereof is connected to a power supply input circuit (not shown) of a power supply device 12 as a power supply input section, and the other end is connected to a power supply output circuit (not shown) of the power supply device 12 as a power supply output section, thereby connecting the field coils C1, C2 and the field coils C3, C4 having plural poles in the parallel circuit state.

According to the above configuration, even when a break occurs at one part of plural lead wires 13, 14, for example, at a point "A" of the lead wire 14, since the respective lead wires 13, 14 forms the parallel circuit, the current supply is secured successively at the lead wire 13 in which a break does not occur, as a result, the operation of the motor apparatus 10 can be continued by the field coils C1, C2 formed by the valid lead wire 13. That is, motor output is reduced because the field has only half magnetmotive force, however, it is possible to avoid the situation that the motor does not operate at all.

When the lead wires 13, 14 are continuously wound around the coil winding portion 11a to 11d, the field coils C1, C2 and the field coils C3, C4 which are positioned opposite to each other are successively formed as pairs respectively, and disconnection or securement of current supply to coils is performed by each pair when a break occurs. Therefore, field balance is maintained to be symmetrical without being lost, which prevents abnormal vibration and the like of the motor.

In the embodiment, explanation has been performed concerning the stator, however, it is also preferable that the same parallel circuit system can be applied to coils provided at the rotor.

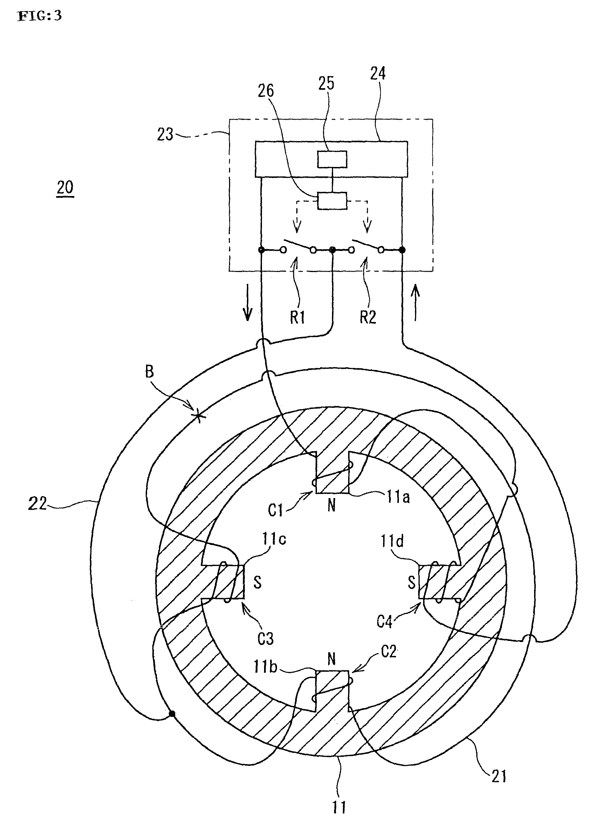

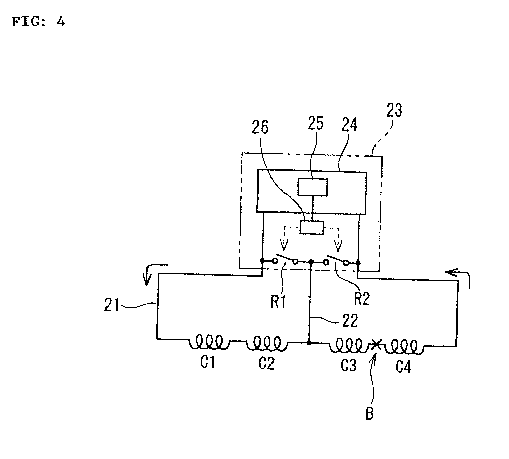

Fig. 3 and Fig. 4 show a second embodiment.

A motor apparatus 20 of the embodiment forms field coils C1 to C4 of the stator 11 in a series circuit and takes a branch wire system in which a branch wire 22 is drawn from the middle of a lead wire 21.

Fig. 3 is a view of the motor apparatus 20 in which a rotor is omitted, and Fig. 4 is a circuit diagram thereof.

The field coils C1 to C4 are formed by winding one lead wire 21 around coil winding portions 11a to 11d of the stator 11 continuously so that the wire crosses itself. Specifically, the coil winding portions 11a and 11b arranged opposite to each other with respect to the motor central axis are made to be one pair, the coil winding portions 11c and 11d are made to be another pair, and the lead wire 21 is wound continuously by each pair. That is, first, the lead wire 21 is continuously wound around the coil winding portions 11a, 11b in series, then, the lead wire 21 is continuously wound around the coil winding portions 11c, 11d in series.

The branch wire 22 is drawn from a relay point of the lead wire 21 between pairs adjacent to each other, namely, from the lead wire 21 between the field coils C2 and C3. Both ends of the lead wire 21 and an end of the branch wire 22 are connected to a control means 23.

The control means 23 includes a power supply device 24 to which both ends of the lead wire 21 are connected, a first relay R1 performing connection/disconnection between one side of the lead wire 21 and the branch wire 22, a second relay R2 performing connection/disconnection between the other side of the lead wire 21 and the branch wire 22, and a relay control unit 26 controlling switching between the first relay R1 and the second relay R2. The first relay R1 and the second relay R2 are opened at a normal state. The power supply device 24 is provided with a current-carrying sensor 25 (abnormality detection means) detecting presence of current flowing in the lead wire 21, and the current-carrying sensor 25 is connected to the relay control unit 26. That is, the current-carrying sensor 25 transmits an abnormality signal to the relay control unit 26 when current supply of the lead wire 21 is stopped during operation of the motor.

Next, operation when a break occurs will be explained.

For example, in the case that a break occurs at a point "B" which is one part of the lead wire 21, the current-carrying sensor 25 detects that current does not flow in the lead wire 21 and transmits an abnormality signal to the relay control unit 26. The relay control unit 26 switches the first relay R1 to a closed state tentatively when receiving the abnormality signal. In this case, since the break occurs at the point "B", the current-carrying sensor 25 does not detect current yet, and the abnormality signal is kept transmitted to the relay control unit 26. Next, the relay control unit 26 returns the first relay R1 to the open state as well as switches the second relay R2 to the closed state. Then, the current-carrying sensor 25 detects that the current flows by taking the branch wire 22 as a bypass, and stops transmission of the abnormality signal. Therefore, the relay control unit 26 maintains the first relay R1 and the second relay R2 in the present state, and determines the branch wire 22 as a power supply output section.

According to the above configuration, current supply can be secured, bypassing the abnormal point (point B) due to the break by using the branch wire 22, and the operation of the motor apparatus 20 can be continued by the field coils C1, C2 which are the valid parts. The field coils C1, C2 and the field coils C3, C4 which are positioned opposite to each other are continuously formed as pairs respectively, and the branch line 22 is drawn from the relay point between respective pairs. Therefore, the field coils C1 and C2 which remain in the valid state when the break occurs are opposite to each other, and it is possible to prevent the field balance from being asymmetrical and being lost. In the embodiment, explanation has been performed concerning the stator, however, the same branch wire system can be applied to coils to be provided at a rotor.

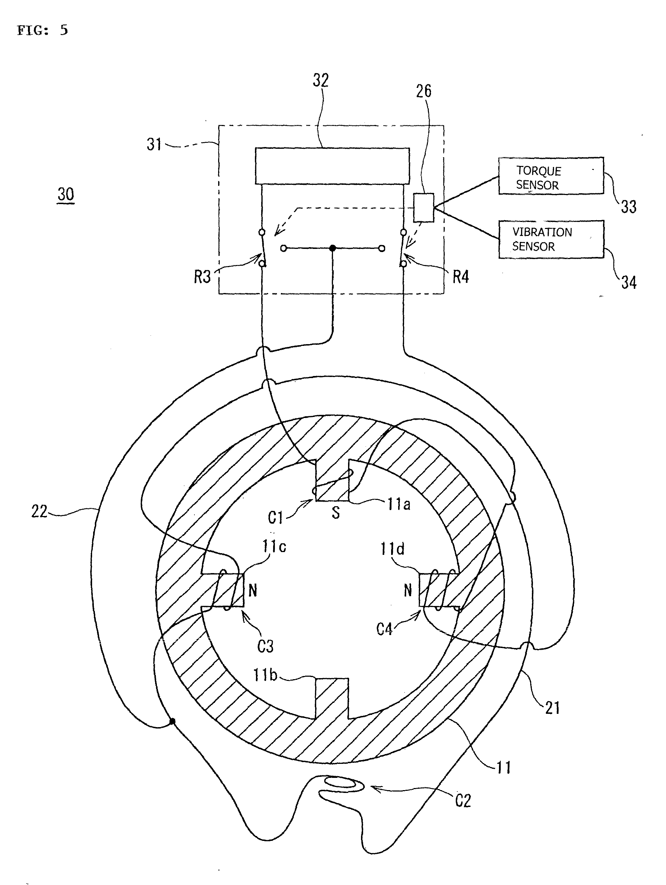

Fig. 5 shows a third embodiment.

A point different from the second embodiment is that a torque sensor 33 and a vibration sensor 34 are provided as abnormality detection means.

A control means 31 of the embodiment includes a power supply device 32 to which both ends of the lead wire 21 are connected, a first relay R3 switching connection between either one end of the lead wire 21 or the branch wire 22 and the power supply device 32, a second relay R4 switching connection between either the other end of the lead wire 21 or the branch wire 22 and the power supply device 32, and the relay control unit 26 controlling switching of the first relay R3 and the second relay R4. The first relay R3 connects one end of the lead wire 21 to the power supply device 32 at the normal state, as well as the second relay R4 connects the other end of the lead wire 21 to the power supply device 32 at the normal state.

The torque sensor 33 detecting output torque of the motor apparatus 30 and a vibration sensor 34 detecting vibration of the motor apparatus 30 are connected to the relay control unit 26.

The torque sensor 33, when a torque amount during operation of the motor apparatus is less than a predetermined value, judges that abnormality occurs at any of the field coils C1 to C4 and the field balance is lost, and transmits an abnormality signal to the relay control unit 26.

The vibration sensor 34, when vibration during operation of the motor is more than a predetermined value, judges that abnormality occurs at any of the field coils C1 to C4 and the field balance is lost, and transmits an abnormality signal to the relay control unit 26.

Next, operation when abnormality occurs in the field coils will be explained.

For example, in the case that one field coil C2 is dropped off from the coil winding portion 11b, since the field balance of the stator 11 becomes asymmetrical, the rotor (not shown) receives unbalanced force and vibrates. As a result, abnormal vibration is detected at the vibration sensor 34. Or, since magnetic field is reduced by the drop-off of the field coil C2, abnormality in which output torque of the motor is also reduced to be less than the predetermined value is detected in the torque sensor 33.

When the abnormality is detected in the vibration sensor 34 and/or torque sensor 33, an abnormality signal is transmitted to the relay control unit 26. The relay control unit 26 switches connection of the first relay R3 to the side of the branch wire 22 tentatively when the abnormality signal is received. In this case, current supply to the field coils C1 and C2 is cut off, and current flows only at the field coils C3 and C4 which are arranged opposite to each other, as a result, the field balance becomes normal and the transmission of the abnormality signal from the vibration sensor 34 is stopped.

Next, the relay control unit 26 returns connection of the first relay R3 to the side of the lead wire 21 tentatively, as well as switches connection of the second relay R4 to the side of the branch wire 22. In this case, current supply to the field coils C3 and C4 is cut off and only the field coil C1 becomes valid. Therefore, abnormal vibration is detected by the vibration sensor 34 or further reduction of output torque is detected by the torque sensor 33.

According to the above, the relay control unit 26 judges that the former connection is preferable because there is not an abnormality signal from the vibration sensor 34 and output torque is larger, therefore, the unit maintains the state in which the first relay R3 is connected to the side of the branch wire 22 and the second relay R4 is connected to the lead wire 21, and determines the branch wire 22 as a power supply input section.

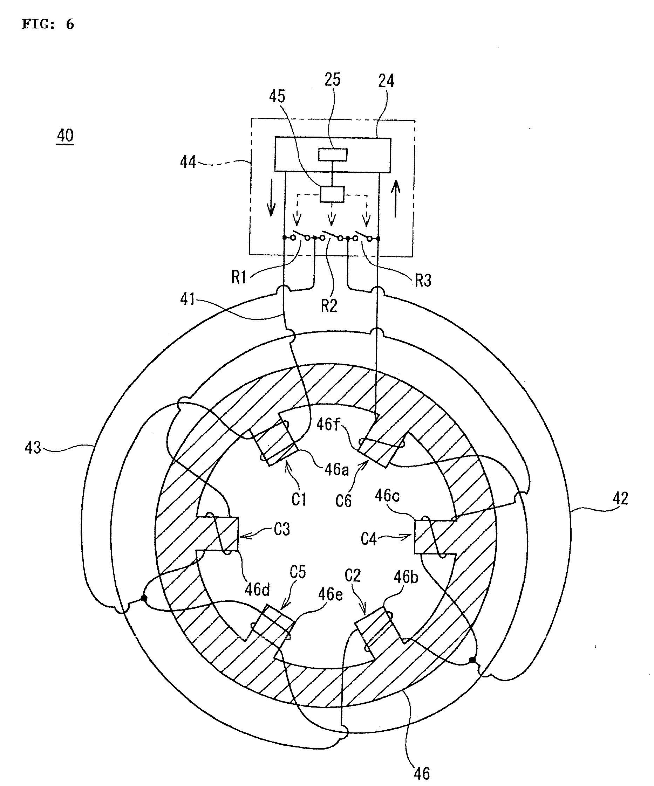

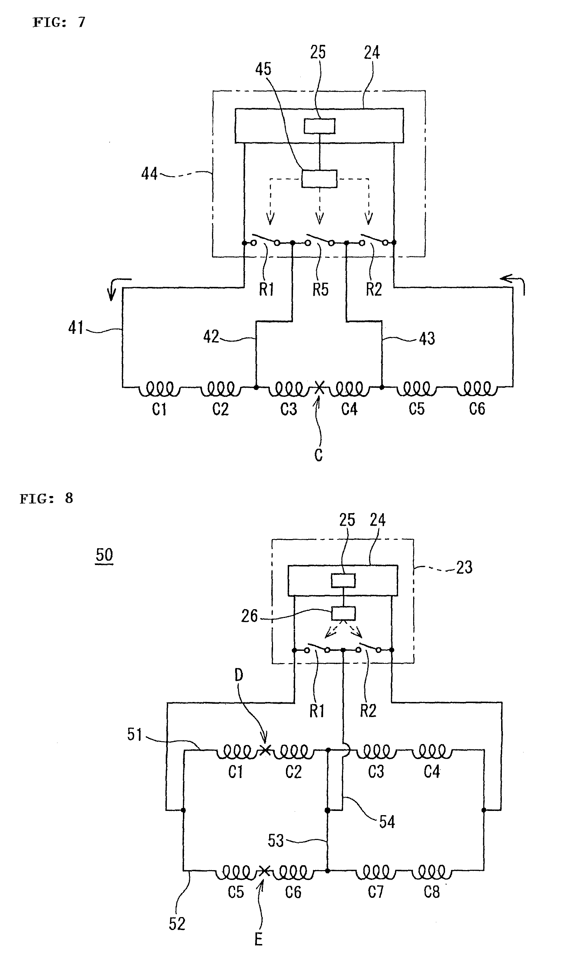

Fig. 6 and Fig. 7 show a fourth embodiment.

A motor apparatus 40 of the embodiment forms field coils C1 to C6 of the stator 11 as six poles in a series circuit, and takes a branch wire system in which two branch wires 42, 43 are drawn from the middle of a lead wire 41 respectively.

Fig. 6 is a view of the motor apparatus 40 in which a rotor is omitted, and Fig. 7 is a circuit diagram thereof.

At an inner circumferential face of a stator 46, six coil winding portions 46a to 46f protrude inside at equal intervals in the circumferential direction. Field coils C1 to C6 are formed by winding one lead wire 41 around coil winding portions 46a to 46f continuously so that the wire crosses itself. Specifically, the coil winding portions 46a and 46b arranged opposite to each other with respect to the motor central axis are made to be one pair, the coil winding portions 46c and 46d are made to be another pair, the coil winding portions 46e and 46f are made to be further another pair, and the lead wire 41 is wound continuously by each pair. That is, first, the lead wire 41 is continuously wound around the coil winding portions 46a, 46b, then, the lead wire 41 is continuously wound around the coil winding portions 46c, 46d, and lastly, the lead wire 41 is continuously wound around the coil winding portion 46e, 46f.

The branch wires 42, 43 are drawn from relay points of the lead wire 41 between pairs adjacent to each other. That is, the branch wire 42 is drawn from the lead wire 41 between the field coils C2 and C3, and another branch wire 43 is drawn from the lead wire 41 between the field coils C4 and C5. Both ends of the lead wire 41 and ends of the branch wires 42, 43 are connected to a control means 44.

The control means 44 includes the power supply device 24 to which both ends of the lead wire 41 are connected, a first relay R1 performing connection/disconnection between one side of the lead wire 41 and the branch wire 42, a second relay R2 performing connection/disconnection between the other side of the lead wire 41 and the branch wire 43, a third relay R5 performing connection/disconnection between the branch wire 42 and the branch wire 43 and a relay control unit 45 controlling switching of the first relay R1, the second relay R2 and the third relay R5. Respective relays R1, R2 and R5 are opened at the normal state. The power supply device 24 is provided with the current-carrying sensor 25 (abnormality detection means) detecting presence of current flowing in the lead wire 41, and the current-carrying sensor 25 is connected to the relay control unit 45. That is, the current-carrying sensor 25 transmits an abnormality signal to the relay control unit 45 when current supply of the lead wire 41 is stopped during operation of the motor.

Next, operation when a break occurs will be explained.

For example, in the case that a break occurs at a point "C" which is one part of the lead wire 41, the current-carrying sensor 25 detects that current does not flow in the lead wire 41 and transmits an abnormality signal to the relay control unit 45. The relay control unit 45 switches the first relay R1 to a closed state tentatively when receiving the abnormality signal. In this case, since the break occurs at the point "C", the current-carrying sensor 25 does not detect current yet, and the abnormality signal is kept transmitted to the relay control unit 45. Next, the relay control unit 45 returns the first relay R1 to the open state as well as switches the third relay R5 to the closed state. Then, the current-carrying sensor 25 detects that the current flows by taking the branch wire 42 as a bypass, and stops transmission of the abnormality signal, therefore, the relay control unit 45 maintains respective relays R1, R2 and R5 in the present state and determines the branch wire 42 as a power supply input section.

Fig. 8 shows a fifth embodiment.

A motor apparatus 50 of the embodiment takes a hybrid system in which the above parallel circuit system is combined with the branch wire system.

Fig. 8 is a circuit diagram of field coils C1 to C8 formed in a stator (not shown). The field coils C1 to C8 are formed as eight poles and each four-poles connected in series are formed in a parallel circuit. That is, the field coil C1 to C4 are wound by a lead wire 51 in series, whereas the field coils C5 to C8 are wound by another lead wire 52 in series. The field coils C1 to C8 has four pairs which are respectively arranged opposite to each other as C1 and C2, C3 and C4, C5 and C6, and C7 and C8. Input sides and output sides of respective lead wires 51, 52 are connected each other, and one end is connected to a power input circuit (not shown) of the power supply device 24 as a power supply input section, as well as the other end is connected to a power supply output circuit (not shown) of the power supply device 24 as a power supply output section.

A relay point between adjacent pairs in one lead wire 51 is connected to a relay point between adjacent pairs in the other lead wire 52 by a short-circuit wire 53. That is, the relay point between the field coils C2 and C3, and the relay point between the field coils C6 and C7 are connected by the short-circuit wire 53. A branch wire 54 is drawn from the short-circuit wire 53 and connected to the control means 23.

The control means 23 includes, as same as the second embodiment, the power supply device 24 to which both ends of the lead wire 51 are connected, a first relay R1 performing connection/disconnection between one side of the lead wire 51 and the branch wire 54, a second relay R2 performing connection/disconnection between the other side of the lead wire 51 and the branch wire 54, and a relay control unit 26 controlling switching between the first relay R1 and the second relay R2. The first relay R1 and the second relay R2 are opened at a normal state. The power supply device 24 is provided with a current-carrying sensor 25 (abnormality detection means) detecting presence of current flowing in the lead wire 51, and the current-carrying sensor 25 is connected to the relay control unit 26.

Next, operation when a break occurs will be explained.

For example, if a break occurs at a point "D" which is one part of the lead wire 51, respective lead wires 51, 52 form a parallel circuit, since current supply is successively secured in the lead wire 52 in which a break does not occur, operation of the motor apparatus 50 can be continued by the field coils C5 to C8 formed by the valid lead wire 52.

As another example, in the case that breaks occur both at the point "D" which is one part of the lead wire 51 and a point "E" which is one part of lead wire 52, the current-carrying sensor 25 detects that current does not flow in the lead wires 51, 52, and transmits an abnormality signal to the relay control unit 26. The relay control unit 26 switches the first relay R1 to a closed state tentatively when receiving the abnormality signal. Then, the current-carrying sensor 25 detects that the current flows at the field coils C3, C4, C7 and C8 by taking the branch wire 54 as a bypass, and stops transmission of the abnormality signal. Therefore, the relay control unit 26 maintains the first relay R1 and the second relay R2 in the present state, and determines the branch wire 54 as a power supply input section.

According to the above configuration, even when abnormality such as breaks and the like occur at both respective lead wires 51, 52 forming the parallel circuit, it is possible to secure current supply and continue operation of the motor, bypassing plural points of breaks by forming a bypass by the branch wire 54.

### Industrial Applicability

The motor apparatus of the invention is a motor having high invulnerability which is capable of continuing operation even when a break or the like occurs at one part of the lead wire forming coils, therefore, it is suitably applied as a driving motor for various transportation such as ships, vehicles, and railways, particularly, suitably applied as a propellant motor for the ship. Furthermore, the motor is suitably applied as an industrial motor such as for a power generating facility.

## Claims

1. A motor apparatus,
wherein lead wires forming coils of plural poles by being wound around plural coil winding portions provided at intervals in a circumferential direction of a rotor and/or stator are lead wires of a parallel circuit provided between a power supply input circuit and a power supply output circuit.

2. The motor apparatus according to claim 1,
wherein the lead wires of the parallel circuit are wound around pairs of coil winding portions in series, the pairs of coil winding portions being arranged opposite to each other in the plural coil winding portions provided with even numbers at equal intervals in the circumferential direction.

3. The motor apparatus according to claim 1 or 2,
wherein, the lead wires of the parallel circuit are wound around two or more coil winding portions in series, a short-circuit wire connecting a relay point between the coils of the lead wire wound in series and a relay point of another lead wire provided in parallel therewith, a branch wire is drawn from the short-circuit wire, and the branch wire and the lead wires are connected to a control means; and
wherein the control means switches the branch wire to a power supply input section or a power supply output section when receiving an abnormality signal from an abnormality detection means.

4. A motor apparatus in which coils of plural poles are formed in a series circuit state by winding a lead wire around plural coil winding portions provided at intervals in a circumferential direction of a rotor and/or stator, and one end of the lead wire is made to be a power supply input section and the other end is made to be a power supply output section,
wherein a branch wire is drawn from a relay point between adjacent coils in the lead wire, and the branch wire and the lead wire are connected to a control means; and
wherein the control means switches the branch wire to a power supply input section or the power supply output section when receiving an abnormality signal from an abnormality detection means.

5. The motor apparatus according to claim 3 or 4,
wherein the control means, when receiving an abnormality signal from the abnormality detection means, sequentially selects and tries two of the both ends of the lead wire and the branch wires as power supply input and output sections, searches the branch wire whereby the abnormality detected by the abnormality detection means is alleviated, and determines the searched branch wire as the power supply input section or the power supply output section.

6. The motor apparatus according to any of claims 3 to 5,
wherein the abnormality detection means detects presence of current in which both ends of the lead wire are the power supply input and output sections, judges that a break occurs when the current does not flow, and transmits an abnormality signal to the control means.

7. The motor apparatus according to any of claims 3 to 5,
wherein the abnormality detection means comprises a torque sensor and/or a vibration sensor, and
wherein, when a torque amount detected in the torque sensor is less than a predetermined value, and/or when vibration detected by the vibration sensor is more than a predetermined value, the abnormality detection means judges that an abnormality occurs at any of coils and transmits an abnormality signal to the control means.

8. The motor apparatus according to any of claims 3 to 7,
wherein plural coil winding portions are provided with even numbers at equal intervals in a circumferential direction and the coil winding portions arranged opposite to each other with respect to the central axis are taken as a pair, the lead wires are wound by each pair and the branch wire is drawn from the relay point between adjacent pairs.
